# EUROPEAN PATENT APPLICATION

(11) **EP 4 585 386 A1**
(43) Date of publication of application: **16.07.2025**
(21) Application number: 23871785.4
(22) Date of filing: 06.09.2023
(51) Int. Cl.: B29B 13/10, C08J 3/12

(54) **METHOD FOR PRODUCING POLYTETRAFLUOROETHYLENE POWDER, AND POLYTETRAFLUOROETHYLENE POWDER**

(30) Priority: 27.09.2022 JP 2022153635
(71) Applicant: DAIKIN INDUSTRIES, LTD., Osaka-shi, Osaka 530-0001 (JP)
(72) Inventor: MUKAE, Hirofumi, Osaka-Shi, Osaka 530-0001 (JP); ISHII, Kenji, Osaka-Shi, Osaka 530-0001 (JP); NAKAUE, Ayane, Osaka-Shi, Osaka 530-0001 (JP)
(74) Representative: Hoffmann Eitle
(86) International application number: PCT/JP2023/032537
(87) International publication number: WO 2024/070545

(57) **Abstract**

The disclosure aims to provide a method for producing a polytetrafluoroethylene powder in which polytetrafluoroethylene can be finely pulverized without the need for drying or other post-processing, and the polytetrafluoroethylene powder. Provided is a method for producing a polytetrafluoroethylene powder. The method includes: a pulverization step of pulverizing polytetrafluoroethylene using a pulverizer provided with a pulverizing part, with the pulverizing part being controlled to have a surface temperature of lower than 35°C.

## Description

### TECHNICAL FIELD

The disclosure relates to methods for producing polytetrafluoroethylene powders and polytetrafluoroethylene powders.

### BACKGROUND ART

A known fluororesin pulverization method includes pulverizing a fluororesin coarse powder dispersed in water containing a dispersing aid by a wet mill method (see Patent Literature 1, for example).

### CITATION LIST

### - Patent Literature

Patent Literature 1: JP 2020-006578 A

### SUMMARY OF INVENTION

### - Technical Problem

The disclosure aims to provide a method for producing a polytetrafluoroethylene powder in which polytetrafluoroethylene can be finely pulverized without the need for drying or other post-processing, and the polytetrafluoroethylene powder.

### - Solution to Problem

The disclosure (1) relates to a method for producing a polytetrafluoroethylene powder, the method including: a pulverization step of pulverizing polytetrafluoroethylene using a pulverizer provided with a pulverizing part, with the pulverizing part being controlled to have a surface temperature of lower than 35°C.

The disclosure (2) relates to the production method according to the disclosure (1), wherein the pulverizing part is a grinding part capable of grinding the polytetrafluoroethylene.

The disclosure (3) relates to the production method according to the disclosure (2), wherein the pulverization step includes grinding the polytetrafluoroethylene using at least a pair of the grinding parts placed opposite to each other.

The disclosure (4) relates to the production method according to any one of the disclosures (1) to (3), wherein the polytetrafluoroethylene is a polytetrafluoroethylene having a history of being heated to a melting point thereof or higher.

The disclosure (5) relates to the production method according to any one of the disclosures (1) to (4), wherein the pulverization step is performed in a dry manner.

The disclosure (6) relates to the production method according to any one of the disclosures (1) to (5), wherein the pulverizer includes an inlet and an outlet, and the pulverization step is continuously performed.

The disclosure (7) relates to the production method according to any one of the disclosures (1) to (6), wherein the pulverization step is repeated multiple times.

The disclosure (8) relates to the production method according to any one of the disclosures (1) to (7), further including a coarse pulverization step of coarsely pulverizing polytetrafluoroethylene to provide a coarse powder, wherein the coarse powder obtained in the coarse pulverization step is to be fed to the pulverization step.

The disclosure (9) relates to a polytetrafluoroethylene powder including scaly particles of polytetrafluoroethylene.

The disclosure (10) relates to the polytetrafluoroethylene powder according to the disclosure (9), wherein the polytetrafluoroethylene powder has one or more melting points within a temperature range below 333°C.

The disclosure (11) relates to the polytetrafluoroethylene powder according to the disclosure (9) or (10), wherein the polytetrafluoroethylene powder has a median diameter of 110 µm or smaller.

The disclosure (12) relates to the polytetrafluoroethylene powder according to any one of the disclosures (9) to (11), wherein the polytetrafluoroethylene in a form of a test piece has an L* value in the L*a*b* color space of 70 or higher, the test piece being prepared by molding the polytetrafluoroethylene powder under the following conditions:
(molding conditions)
feeding 54 g of the polytetrafluoroethylene powder into a φ120-mm mold;
keeping the polytetrafluoroethylene powder at 370°C for 30 minutes using a heat press to transform the polytetrafluoroethylene into a molten state;
applying a 3-MPa load to the polytetrafluoroethylene for one minute to compression-mold the
polytetrafluoroethylene; and cooling the mold, thereby providing the test piece.

The disclosure (13) relates to the polytetrafluoroethylene powder according to any one of the disclosures (9) to (12), wherein an L* value in the L*a*b* color space of the polytetrafluoroethylene in a form of a test piece has a rate of change of 25% or lower with respect to an L* value of the polytetrafluoroethylene powder, the test piece being prepared by molding the polytetrafluoroethylene powder under the following conditions:
(molding conditions)
feeding 54 g of the polytetrafluoroethylene powder into a φ120-mm mold;
keeping the polytetrafluoroethylene powder at 370°C for 30 minutes using a heat press to transform the polytetrafluoroethylene into a molten state;
applying a 3-MPa load to the polytetrafluoroethylene for one minute to compression-mold the polytetrafluoroethylene; and
cooling the mold, thereby providing the test piece.

### - Advantageous Effects of Invention

The disclosure can provide a method for producing a polytetrafluoroethylene powder in which polytetrafluoroethylene can be finely pulverized without the need for drying or other post-processing, and the polytetrafluoroethylene powder.

### DESCRIPTION OF EMBODIMENTS

The disclosure will be specifically described hereinbelow.

The disclosure provides a method for producing a polytetrafluoroethylene powder, the method including: a pulverization step of pulverizing polytetrafluoroethylene using a pulverizer provided with a pulverizing part, with the pulverizing part being controlled to have a surface temperature of lower than 35°C.

Polytetrafluoroethylene (PTFE) has a transition point at around 30°C, at which the storage elastic modulus changes. The elastic modulus is lowered at a temperature higher than the transition point, which leads to a difficulty in fine pulverization of PTFE. In the production method of the disclosure, setting the surface temperature of the pulverizing part below 35°C enables easy fine pulverization. Since the production method of the disclosure can be carried out in a dry manner, post-processing such as drying is not required, which is advantageous in terms of industrial production. Moreover, since use of dispersing aids is not required, defects such as coloring caused by dispersing aids are advantageously less likely to occur.

In the pulverization step, PTFE is pulverized with the pulverizing part in the pulverizer being controlled to have a surface temperature of lower than 35°C. The surface temperature is preferably 30°C or lower, more preferably 25°C or lower, still more preferably 20°C or lower. The surface temperature is preferably 1°C or higher, more preferably 5°C or higher, still more preferably 10°C or higher.

The surface temperature is preferably the temperature of a portion of the pulverizing part in contact with the PTFE.

The pulverizer used in the pulverization step is provided with a pulverizing part. The pulverizing part is a part capable of pulverizing the PTFE.

The pulverizing part may be made of metal, ceramic, or other materials. In order to easily control the temperature, the pulverizing part is preferably made of metal.

In order to easily perform fine pulverization, the pulverizing part is preferably a grinding part capable of grinding the PTFE.

The grinding part is preferably a part utilizing the principle of a grinding mill to grind (mill) the material to be pulverized by friction between the upper and lower millstones (grinding stones), in particular, a part utilizing the principle of a rotary grinding mill which grinds the material by rotating the millstones.

The grinding part is preferably in the shape of a disk, more preferably in the shape of a millstone.

In the case where the pulverizing part is the grinding part, the PTFE is preferably ground using at least a pair of the grinding parts placed opposite to each other. In such an embodiment, preferably, the PTFE is fed to the gap between a pair of the grinding parts, one of the grinding parts is rotated, and the resulting friction with the other grinding part is used to grind the PTFE. In this case, the other grinding part may be fixed or rotated.

The pulverizer preferably has a temperature control function capable of controlling the temperature of the pulverizing part, more preferably has a cooling mechanism capable of cooling the pulverizing part. The cooling mechanism used may be a known mechanism of, for example, water-cooling type or air-cooling type.

The pulverizer is preferably a mill-type pulverizer, and examples thereof include mill-type pulverizers with a temperature control function as those disclosed in JP 2016-215115 A, JP 2016-209813 A, and JP 2003-047867 A.

The pulverizer preferably includes an inlet to which the material to be pulverized is fed and an outlet through which the pulverized material is discharged. The pulverizer including an inlet and an outlet allows the pulverization step to be performed continuously. The shape and size of the inlet and outlet are not limited as long as the material can be adequately fed and discharged.

In the case where pulverization is performed by rotating the pulverizing part in the pulverization step, the rotation speed is preferably 45 rpm or more, more preferably 50 rpm or more, still more preferably 60 rpm or more, while preferably 120 rpm or less, more preferably 110 rpm or less, still more preferably 100 rpm or less.

In the case where the at least a pair of the grinding parts is used, the size of the gap can be set in accordance with the aimed particle size of the resulting PTFE powder. For example, the size of the gap is preferably 10 µm or smaller, more preferably 5 µm or smaller, still more preferably 2 µm or smaller.

The lower limit of the size is not limited, and grinding may be performed with the grinding parts in contact with each other. In such a case, contact between the grinding parts is preferably within the range that does not create friction between the grinding parts.

The discharge amount of the pulverized PTFE from the pulverizer in the pulverization step is preferably 0.5 kg/h or more, more preferably 1 kg/h or more, still more preferably 1.5 kg/h or more, while preferably 20 kg/h or less, more preferably 10 kg/h or less, still more preferably 5 kg/h or less.

The pulverization step is preferably performed in a dry manner. The phrase "performed in a dry manner" means that pulverization is performed in the substantial absence of liquid (e.g., water). The substantial absence of liquid herein means that the amount of existing liquid is 5% by mass or less relative to the PTFE. The amount of existing liquid is preferably 3% by mass or less, more preferably 1% by mass or less, still more preferably 0.1% by mass or less.

The pulverization step is preferably performed in the substantial absence of dispersing aids. The substantial absence of dispersing aids herein means that the amount of existing dispersing aids is 0.5% by mass or less relative to the PTFE. The amount of existing dispersing aids is preferably 0.1% by mass or less, more preferably 0.01% by mass or less, still more preferably 0.001% by mass or less.

The dispersing aids refer to compounds capable of dispersing the PTFE in water. Examples of the dispersing aids include alcohols, anionic surfactants, and nonionic surfactants.

The pulverization step may be performed only once or repeated multiple times. In the case where the pulverization step is repeated multiple times, the PTFE can be further finely pulverized. The number of repetitions is not limited and may be determined in accordance with the aimed particle size. For example, the number of repetitions may be two or more, and may be five or less.

When counting the number of repetitions, one cycle (or one pass) is defined as the process from feeding PTFE to the pulverizer to discharging the pulverized PTFE.

The pulverization step is also preferably performed continuously using a pulverizer including an inlet and an outlet. The repetition can be continuously performed by placing multiple pulverizers including an inlet and an outlet in series.

PTFE to be pulverized in the pulverization step may be a high-molecular-weight PTFE.

The PTFE may be a homopolymer of tetrafluoroethylene (TFE) or may be a modified PTFE containing 99.0% by mass or more of a polymerized unit based on TFE (TFE unit) and 1.0% by mass or less of a polymerized unit based on a modifying monomer (modifying monomer unit). The modified PTFE may consist of a TFE unit and a modifying monomer unit.

The modified PTFE preferably contains the modifying monomer unit in an amount of 0.00001 to 1.0% by mass in all polymerized units. The lower limit of the amount of the modifying monomer unit is more preferably 0.0001% by mass, still more preferably 0.001% by mass, further preferably 0.005% by mass, even more preferably 0.010% by mass. The upper limit of the amount of the modifying monomer unit is preferably 0.90% by mass, more preferably 0.50% by mass, still more preferably 0.40% by mass, further preferably 0.30% by mass, even more preferably 0.20% by mass, particularly preferably 0.10% by mass.

The modifying monomer unit herein means a moiety that is part of the molecular structure of PTFE and is derived from a modifying monomer.

The modifying monomer may be any monomer copolymerizable with TFE, and examples thereof include: perfluoroolefins such as hexafluoropropylene (HFP); hydrogen-containing fluoroolefins such as trifluoroethylene and vinylidene fluoride (VDF); perhaloolefins such as chlorotrifluoroethylene; perfluorovinyl ethers; perfluoroallyl ethers; (perfluoroalkyl)ethylenes; and ethylene. One modifying monomer may be used alone or two or more modifying monomers may be used in combination.

Examples of the perfluorovinyl ethers include, but are not limited to, unsaturated perfluoro compounds represented by the following formula (A):

CF₂=CF-ORf (A)

wherein Rf is a perfluoroorganic group. The term "perfluoroorganic group" herein means an organic group in which all hydrogen atoms bonded to any carbon atom are replaced by fluorine atoms. The perfluoro organic group may have an ether oxygen.

Examples of the perfluorovinyl ethers include a perfluoro(alkyl vinyl ether) (PAVE) represented by the formula (A) in which Rf is a C1-C10 perfluoroalkyl group. The perfluoroalkyl group preferably has a carbon number of 1 to 5.

Examples of the perfluoroalkyl group in the PAVE include a perfluoromethyl group, a perfluoroethyl group, a perfluoropropyl group, a perfluorobutyl group, a perfluoropentyl group, and a perfluorohexyl group.

Examples of the perfluorovinyl ether also include: those represented by the formula (A) wherein Rf is a C4-C9 perfluoro(alkoxy alkyl) group; those represented by the formula (A) wherein Rf is a group represented by the following formula: 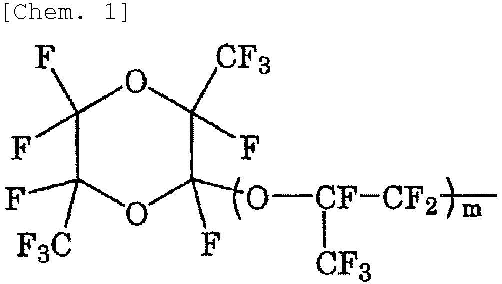 wherein m is an integer of 0 or 1 to 4; and those represented by the formula (A) wherein Rf is a group represented by the following formula: 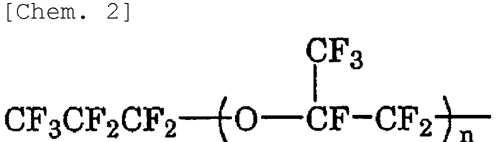 wherein n is an integer of 1 to 4.

Examples of the (perfluoroalkyl)ethylenes (PFAE) include, but are not limited to, (perfluorobutyl)ethylene (PFBE) and (perfluorohexyl)ethylene.

Examples of the perfluoroallyl ethers include fluoromonomers represented by the following formula (B):

CF₂=CF-CF₂-ORf¹ (B)

wherein Rf¹ is a perfluoroorganic group.

Rf¹ is preferably a C1-C10 perfluoroalkyl group or a C1-C10 perfluoroalkoxyalkyl group. The perfluoroallyl ether preferably includes at least one selected from the group consisting of CF₂=CF-CF₂-O-CF₃, CF₂=CF-CF₂-O-C₂F₅, CF₂=CF-CF₂-O-C₃F₇, and CF₂=CF-CF₂-O-C₄F₉, more preferably includes at least one selected from the group consisting of CF₂=CF-CF₂-O-C₂F₅, CF₂=CF-CF₂-O-C₃F₇, and CF₂=CF-CF₂-O-C₄F₉, and is still more preferably CF₂=CF-CF₂-O-CF₂CF₂CF₃.

The PTFE has a standard specific gravity (SSG) of preferably 2.280 or less, more preferably 2.10 or less. The SSG is preferably 1.50 or more, more preferably 1.60 or more. The SSG is determined by the immersion method in conformity with ASTM D792 using a sample molded in conformity with ASTM D4895.

The PTFE commonly has non-melt secondary processibility. The non-melt secondary processibility refers to a property of a polymer with which the melt flow rate is non-measurable at a temperature higher than the melting point in conformity with ASTM D1238 and D2116, in other words, a property with which the polymer does not easily flow even within a melting point range.

The PTFE preferably has a history of being heated to the melting point thereof or higher. A PTFE having a history of being heated to the melting point thereof or higher is commonly not easily pulverized with its high molecular weight maintained. According to the production method of the disclosure, even a PTFE having a history of being heated to the melting point thereof or higher can be finely pulverized in a simple process.

The heating may be heating for molding or heat treatment, for example.

The PTFE preferably has a melting point of 310°C or higher, more preferably 320°C or higher, while preferably lower than 333°C. The PTFE may also have a melting point within a temperature range of 333°C or higher.

A melting point within the above range indicates that the PTFE has a history of being heated to the melting point thereof or higher.

The melting point herein is the temperature corresponding to the local minimum on a heat-of-fusion curve obtained by differential scanning calorimetry (DSC) at a temperature-increasing rate of 10°C/min using X-DSC7000 (available from Hitachi High-Tech Science Corp.). In the case where one melting peak includes two or more local minimums, each minimum is defined as a melting point.

The PTFE is preferably not crosslinked. The crosslinking may refer to crosslinking by application of ionizing radiation, e.g., at a temperature equal to or higher than the melting point of PTFE.

The PTFE may further contain a filler.

The filler may include, for example, at least one selected from the group consisting of glass fiber, glass beads, carbon fiber, spherical carbon, carbon black, graphite, silica, alumina, mica, silicon carbide, boron nitride, titanium oxide, bismuth oxide, cobalt oxide, molybdenum disulfide, bronze, gold, silver, copper, and nickel.

Preferred is at least one selected from the group consisting of glass fiber, carbon fiber, carbon black, and bronze.

PTFE to be used in the pulverization step may be in the form of powder.

The PTFE to be used in the pulverization step may be of any size, as long as it can be fed to the pulverizer. The maximum diameter of the particles may be about 10 mm or about 5 mm. The size of PTFE may also be 1 mm or smaller.

In order to further reduce the particle size of the powder resulting from the pulverization, the particle size of PTFE upon feeding is preferably small.

The maximum diameter of particles of PTFE used in the pulverization step may be 10 mm or smaller, 5 mm or smaller, or 1 mm or smaller.

The maximum diameter of particles of 1 mm or larger herein is obtained by measurement using a digital microscope. In the case of particles of smaller than 1 mm, the maximum diameter is evaluated in terms of the median diameter.

The median diameter is equivalent to the particle size corresponding to 50% of the cumulative volume in the particle size distribution determined in dry measurement using a laser diffraction particle size distribution analyzer (LS13 320) available from Beckman Coulter, Inc. at a vacuum pressure of 20 mH₂O.

PTFE to be used in the pulverization step may be coarsely pulverized in advance. The production method of the disclosure further includes a coarse pulverization step of coarsely pulverizing PTFE to provide a coarse powder, wherein the coarse powder obtained in the coarse pulverization step is to be fed to the pulverization step.

PTFE to be coarsely pulverized in the coarse pulverization step may be, for example, a molded article obtained by molding and firing a PTFE having no history of being heated to the melting point thereof or higher, cutting chips of the molded article, or offcuts of the cut molded article. The molded article may have any shape. The PTFE to be coarsely pulverized may also be a PTFE having been heated to the melting point thereof or higher without molding.

The coarse pulverization may be performed using a pulverizer, for example. Any pulverizer may be used that can pulverize PTFE to some extent. Examples thereof include a cutter mill, an air jet mill, a hammer mill, a force mill, and a freeze pulverizer.

The production method of the disclosure may further include a step of heating the PTFE powder resulting from the pulverization step at a temperature of 100°C to 340°C. The heat treatment can eliminate particle distortion caused by pulverization.

The production method of the disclosure preferably does not include embrittlement by application of ionizing radiation.

The production method of the disclosure, including the pulverization step, can provide a PTFE powder with a small particle size.

The pulverization step in the production method of the disclosure can be performed continuously, yielding a PTFE powder with a small particle size at higher productivity compared to methods such as freeze pulverization.

The PTFE powder obtainable in the production method of the disclosure has a D10 of preferably 50 µm or smaller, more preferably 40 µm or smaller, still more preferably 30 µm or smaller, while preferably 5 µm or larger, more preferably 10 µm or larger, still more preferably 20 µm or larger.

The D10 is equivalent to the particle size corresponding to 10% of the cumulative volume in the particle size distribution determined in dry measurement using a laser diffraction particle size distribution analyzer (LS13 320) available from Beckman Coulter, Inc. at a vacuum pressure of 20 mH₂O.

The PTFE powder obtainable in the production method of the disclosure has a median diameter (D50) of preferably 150 µm or smaller, more preferably 110 µm or smaller, still more preferably 100 µm or smaller, further preferably 90 µm or smaller, further preferably 80 µm or smaller, further preferably 70 µm or smaller, particularly preferably 50 µm or smaller. The lower limit may be, for example, but is not limited to, 1 µm or 10 µm.

The median diameter is equivalent to the particle size corresponding to 50% of the cumulative volume in the particle size distribution determined in dry measurement using a laser diffraction particle size distribution analyzer (LS13 320) available from Beckman Coulter, Inc. at a vacuum pressure of 20 mH₂O.

The PTFE powder obtainable in the production method of the disclosure has a D90 of preferably 300 µm or smaller, more preferably 250 µm or smaller, still more preferably 200 µm or smaller, further preferably 150 µm or smaller, while preferably 50 µm or larger, more preferably 60 µm or larger, still more preferably 70 µm or larger.

The D90 is equivalent to the particle size corresponding to 90% of the cumulative volume in the particle size distribution determined in dry measurement using a laser diffraction particle size distribution analyzer (LS13 320) available from Beckman Coulter, Inc. at a vacuum pressure of 20 mH₂O.

The disclosure also provides a PTFE powder including scary particles of PTFE.

The scary particles of PTFE have a diameter-to thickness ratio (diameter/thickness) of preferably 3.0 or higher, more preferably 4.0 or higher, still more preferably 5.0 or higher, while preferably 20 or lower, more preferably 15 or lower, still more preferably 10 or lower.

The ratio is determined based on the diameters and thicknesses of the PTFE particles measured by observing the PTFE particles using a scanning electron microscope (SEM) and analyzing the images. The ratio is determined for 20 particles and the average value is used.

The PTFE powder of the disclosure preferably has a history of being heated to the melting point thereof or higher.

The PTFE powder of the disclosure preferably has at least one melting point within a temperature range lower than 333°C. The temperature range is preferably 310°C or higher, more preferably 320°C or higher. The presence of a melting point within the above temperature range indicates that the PTFE has a history of being heated to the melting point thereof or higher.

The PTFE powder of the disclosure may also have a melting point within a temperature range of 333°C or higher.

The PTFE powder of the disclosure has a D10 of preferably 50 µm or smaller, more preferably 40 µm or smaller, still more preferably 30 µm or smaller, while preferably 5 µm or larger, more preferably 10 µm or larger, still more preferably 20 µm or larger.

The PTFE powder of the disclosure has a median diameter (D50) of preferably 150 µm or smaller, more preferably 110 µm or smaller, still more preferably 100 µm or smaller, further preferably 90 µm or smaller, further preferably 80 µm or smaller, further preferably 70 µm or smaller, particularly preferably 50 µm or smaller. The lower limit may be, for example, but is not limited to, 1 µm or 10 µm.

The PTFE powder of the disclosure has a D90 of preferably 300 µm or smaller, more preferably 250 µm or smaller, still more preferably 200 µm or smaller, further preferably 150 µm or smaller, while preferably 50 µm or larger, more preferably 60 µm or larger, still more preferably 70 µm or larger.

The PTFE powder of the disclosure in the form of a test piece preferably has an L* value in the L*a*b* color space of 70 or higher. The test piece is prepared by molding the PTFE powder of the disclosure under the following conditions:
(molding conditions)
feeding 54 g of the polytetrafluoroethylene powder into a φ120-mm mold; keeping the polytetrafluoroethylene powder at 370°C for 30 minutes using a heat press to transform the polytetrafluoroethylene into a molten state; applying a 3-MPa load to the polytetrafluoroethylene for one minute to compression-mold the polytetrafluoroethylene; and cooling the mold, thereby providing the test piece.

The L* value within the above range can lead to reduced coloring upon molding and excellent appearance. The L* value is preferably 75 or higher, more preferably 80 or higher. The upper limit thereof may be, but is not limited to, 90, for example.

The L* value is determined using a Konica Minolta spectrophotometer CM-5 by measuring L*a*b* values for the reflected light under a C light source with a 2° observer angle using the SCI method.

The L* value in the L*a*b* color space of the PTFE powder of the disclosure in the form of a test piece has a rate of change (rate of reduction) of 25% or lower with respect to the L* value of the PTFE powder. The test piece is prepared by molding the PTFE powder under the following conditions:
(molding conditions)
feeding 54 g of the polytetrafluoroethylene powder into a φ120-mm mold; keeping the polytetrafluoroethylene powder at 370°C for 30 minutes using a heat press to transform the polytetrafluoroethylene into a molten state; applying a 3-MPa load to the polytetrafluoroethylene for one minute to compression-mold the polytetrafluoroethylene; and cooling the mold, thereby providing the test piece.

The rate of change of the L* value within the above range can lead to much reduced coloring upon molding and much better appearance. The rate of change of the L* value is more preferably 20% or lower. The lower limit may be, but is not limited to, 5%, for example.

The rate of change of the L* value is determined as follows.

The L* value of the PTFE powder is determined using a Konica Minolta spectrophotometer CM-5. A φ30-mm petri dish for CM-5 is filled with the PTFE powder and the measurement is conducted under a C light source with a 2° observer angle using the SCI method to obtain L*a*b* values for the reflected light. The L* value of a test sample obtained by molding the PTFE powder under the above conditions is measured in the same manner. The rate of change is determined by the following equation using the measurements of the L* values before and after the molding. Rate of change of L* value (%) = |{(L* value of test sample after molding) - (L* value of PTFE powder before molding)}/(L* value of PTFE powder before molding) × 100|

PTFE constituting the PTFE powder of the disclosure may be a high-molecular-weight PTFE. The standard specific gravity (SSG) thereof is preferably 2.280 or less, more preferably 2.10 or less. The SSG is preferably 1.50 or more, more preferably 1.60 or more.

PTFE constituting the PTFE powder of the disclosure is preferably not crosslinked.

PTFE constituting the PTFE powder of the disclosure may have a composition and physical properties similar to the PTFE in the production method of the disclosure.

In consideration of the physical properties after molding and the abrasion resistance and heat resistance as an additive, PTFE constituting the PTFE powder of the disclosure preferably does not exhibit melt flowability. Not exhibiting melt flowability means that the particles retain their shape even when heated above their melting point. The fact that the PTFE does not exhibit melt flowability can be confirmed by observation using, for example, a microscope equipped with a hot stage.

The PTFE of the disclosure may further contain a filler.

The filler may include, for example, at least one selected from the group consisting of glass fiber, glass beads, carbon fiber, spherical carbon, carbon black, graphite, silica, alumina, mica, silicon carbide, boron nitride, titanium oxide, bismuth oxide, cobalt oxide, molybdenum disulfide, bronze, gold, silver, copper, and nickel.

Preferred is at least one selected from the group consisting of glass fiber, carbon fiber, carbon black, and bronze.

The PTFE powder of the disclosure is preferably not subjected to embrittlement by application of ionizing radiation.

The PTFE powder of the disclosure can be suitably produced by the above production method of the disclosure.

The PTFE powder obtained by the production method of the disclosure and the PTFE powder of the disclosure can be suitably used as molding materials. The PTFE powder may be molded, for example, by compression molding, ram extrusion molding, hot coining molding, or isostatic molding, although not limited thereto. Preferred among these are ram extrusion molding and hot coining molding.

The molded article obtainable from the PTFE powder obtained by the production method and the molded article obtainable from the PTFE powder of the disclosure can each suitably be used for a lining sheet, packing, gasket, diaphragm valve, heat-resistant electric wire, heat-resistant insulating tape for vehicle motors or generators, release sheet, sealant, casing, sleeve, bellows, hose, piston ring, butterfly valve, rectangular tank, wafer carrier, and the like.

The PTFE powder obtainable by the production method of the disclosure and the PTFE powder of the disclosure can be produced without embrittlement by application of ionizing radiation, and thus can retain the properties originally possessed by PTFE, such as abrasion resistance. Such PTFE powders can also be suitably used as additives for imparting abrasion resistance or heat resistance.

It should be appreciated that a variety of modifications and changes in the structure and other details may be made to the aforementioned embodiments without departing from the spirit and scope of the claims.

### EXAMPLES

The disclosure is described in more detail below with reference to examples, but is not limited to these examples.

The physical properties were determined by the following methods.

### (Melting point)

The melting point was determined as the temperature corresponding to the local minimum on a heat-of-fusion curve obtained by differential scanning calorimetry (DSC) at a temperature-increasing rate of 10°C/min using X-DSC7000 available from Hitachi High-Tech Science Corp. In the case where one melting peak included two or more local minimums, each minimum was defined as a melting point.

### (Standard specific gravity (SSG))

The SSG was determined by the immersion method in conformity with ASTM D792 using a sample molded in conformity with ASTM D4895.

### (Particle size distribution)

The particle size distribution by volume was determined by dry measurement using a laser diffraction particle size distribution analyzer (LS13 320) available from Beckman Coulter, Inc. at a vacuum pressure of 20 mH₂O. The particle size corresponding to 10% of the cumulative particle size distribution was defined as D10, the particle size corresponding to 50% of the cumulative particle size distribution was defined as D50 (median diameter), and the particle size corresponding to 90% of the cumulative particle size distribution was defined as D90.

### (Diameter/thickness ratio)

The ratio is determined based on the diameters and thicknesses of the PTFE particles in the powder measured by observing the PTFE particles using a scanning electron microscope (SEM) and analyzing the images. The ratio was determined for 20 particles and the average value was used.

### (L* value)

A PTFE powder in an amount of 54 g was fed into a φ120-mm mold and kept at 370°C for 30 minutes using a heat press, whereby the PTFE was transformed into a molten state. A 3-MPa load was applied to the PTFE for one minute to compression-mold the PTFE and the mold was cooled, whereby a test piece was provided. The L* value of the test piece was determined using a Konica Minolta spectrophotometer CM-5 by measuring L*a*b* values for the reflected light under a C light source with a 2° observer angle using the SCI method.

The L* value of the obtained PTFE powder was determined using a Konica Minolta spectrophotometer CM-5. A φ30-mm petri dish for CM-5 was filled with the PTFE powder and measurement was performed under the same conditions as those for the test piece.

### (Rate of change (rate of reduction) of L* value)

The rate of change of the L* value was determined by the following equation using the L* value of the PTFE powder before molding and the L value of the molded test piece each measured by the above method. Rate of change of L* value (%) = |{(L* value of test sample after molding) - (L* value of PTFE powder before molding) }/(L* value of PTFE powder before molding) × 100|

### Production Example 1 (production of PTFE powder A-1)

A coarse powder of homo-PTFE obtained by suspension polymerization of a TFE monomer alone was pulverized using a pulverizer to provide a PTFE molding powder (standard specific gravity (SSG): 2.159, melting point: 345.0°C). Then, 35 g of this molding powder was compression-molded in a φ100-mm mold at 30 MPa for one minute and fired at 370°C for three hours. Thereby, a molded article was obtained. The resulting molded article was pulverized using a pulverizer, whereby a PTFE powder A-1 was obtained. The melting point of the PTFE powder A-1 was 328°C. The maximum diameters of the particles observed using a microscope were 1 to 5 mm. The L* value of the powder was 97.

### Production Example 2 (production of PTFE powder A-2)

A molded article obtained as in Production Example 1 was pulverized using a pulverizer, whereby a PTFE powder A-2 was obtained. The melting point of the PTFE powder A-2 was 328°C. The median diameter thereof was 208 µm. The L* value of the powder was 97.

### Example 1

The PTFE powder A-1 was pulverized using a stone mill-type pulverizer including an inlet, an outlet, upper and lower grinding parts including a φ250-mm rotary grinding part, and water channels provided in the upper and lower grinding parts for temperature control using water. Cooling water was passed through the millstones of the pulverizer until the surface temperatures of the millstones measured with a contact thermometer reached 20°C. In that state, pulverization was performed by feeding the PTFE powder A-1 at a discharge rate of 2.3 kg/h, with the upper and lower millstones in contact (0 mm clearance) and the millstone rotation speed set to 75 rpm, whereby a PTFE resin powder B-1 was obtained. Various physical properties of the resulting PTFE powder were measured. The results are shown in Table 1.

### Example 2

A PTFE powder was obtained as in Example 1, except that the pulverization step was performed three passes. Various physical properties of the resulting PTFE powder were measured. The results are shown in Table 1.

### Example 3

A PTFE powder was obtained as in Example 1, except that the millstone rotation speed was 120 rpm. Various physical properties of the resulting PTFE powder were measured. The results are shown in Table 1.

### Example 4

A PTFE powder was obtained as in Example 1, except that the temperature of the millstones was set to 10°C and the millstone rotation speed was 120 rpm. Various physical properties of the resulting PTFE powder were measured. The results are shown in Table 1.

### Example 5

A PTFE powder was obtained as in Example 1, except that the millstone rotation speed was 45 rpm. Various physical properties of the resulting PTFE powder were measured. The results are shown in Table 1.

### Example 6

A PTFE powder was obtained as in Example 1, except that the temperature of the millstones was set to 25°C and the millstone rotation speed was 45 rpm. Various physical properties of the resulting PTFE powder were measured. The results are shown in Table 1.

### Comparative Example 1

A PTFE powder was obtained as in Example 1, except that a stone mill-type pulverizer used included an inlet, an outlet, grinding parts including a φ250-mm rotary grinding part, and a heater for heating inside the upper grinding part, the temperature of the millstones was set to 35°C, and the discharge amount was 2.2 kg/h. Various physical properties of the resulting PTFE powder were measured. The results are shown in Table 1.

### Comparative Example 2

A PTFE powder was obtained as in Comparative Example 1, except that the temperature of the millstones was set to 100°C. Various physical properties of the resulting PTFE powder were measured. The results are shown in Table 1.

### Comparative Example 3

A PTFE powder was obtained as in Comparative Example 1, except that the temperature of the millstones was set to 150°C. Various physical properties of the resulting PTFE powder were measured. The results are shown in Table 1.

### Comparative Example 4

A liquid to be processed was prepared by mixing 1 kg of the PTFE powder A-2, 4 kg of pure water, and 10 g of a surfactant (Cadenax DM10D-W, available from Lion Specialty Chemicals Co., Ltd.).

A stone mill-type pulverizer including an inlet, an outlet, and a φ250-mm rotary grinding part was provided. The liquid to be treated was fed into the pulverizer with a 0 mm clearance, where the upper and lower millstone surfaces were so close that they touched each other. Pulverization was performed three passes with the millstone rotation speed set to 1500 rpm, whereby a suspension containing powdery PTFE was obtained. The resulting suspension was filtered and a PTFE wet powder was taken out, followed by drying at 150°C for 15 hours, whereby a PTFE powder was obtained. Various physical properties of the resulting PTFE powder were measured. The result is shown in Table 2.

**[Table 1]**

| | Setting temperature | Surface temperature of millstone after test | Rotation speed | Discharge amount | Clearance between millstones | Repetition | Particle size distribution (µm) | | | Post-processing | Diameter/Thickness | L* value of molded article | Rate of change of L* value |
|---|---|---|---|---|---|---|---|---|---|---|---|---|---|
| | (°C) | (°C) | (rpm) | (kg/h) | (mm) | (pass) | D10 | D50 | D90 | | | | (%) |
| Example 1 | 20 | 23 | 75 | 2.3 | 0 | 1 | 27 | 78 | 189 | - | 20 | 81 | 17 |
| Example 2 | 20 | 23 | 75 | 2.3 | 0 | 3 | 17 | 41 | 76 | - | 6.9 | 80 | 18 |
| Example 3 | 20 | 26 | 120 | 2.3 | 0 | 1 | 32 | 85 | 199 | - | 20 | 78 | 20 |
| Example 4 | 10 | 17 | 120 | 2.3 | 0 | 1 | 29 | 87 | 255 | - | - | 79 | 19 |
| Example 5 | 20 | 22 | 45 | 2.3 | 0 | 1 | 34 | 108 | 233 | - | - | 82 | 16 |
| Example 6 | 25 | 29 | 45 | 2.3 | 0 | 1 | 44 | 134 | 289 | - | 19 | 81 | 17 |
| Comparative Example 1 | 35 | 38 | 75 | 2.2 | 0 | 1 | 59 | 156 | 335 | - | | 80 | 18 |
| Comparative Example 2 | 100 | 108 | 75 | 2.2 | 0 | 1 | 133 | 438 | 841 | - | | 78 | 20 |
| Comparative Example 3 | 150 | 159 | 75 | 2.2 | 0 | 1 | 128 | 354 | 826 | - | | 81 | 17 |

**[Table 2]**

| | | Comparative Example 4 |
|---|---|---|
| Clearance | (µm) | -50 |
| Rotation speed | (rpm) | 1500 |
| Treatment time | (sec.) | 143 |
| D10 | (µm) | 37 |
| D50 | (µm) | 102 |
| D90 | (µm) | 190 |
| Post-processing | | Filtering and drying at 150°C for 15 h |
| Diameter/Thickness | | 2.0 |
| L* of molded article | | 63 |
| Rate of change of L* | (%) | 35 |

## Claims

1. A method for producing a polytetrafluoroethylene powder, the method comprising:
a pulverization step of pulverizing polytetrafluoroethylene using a pulverizer provided with a pulverizing part, with the pulverizing part being controlled to have a surface temperature of lower than 35°C.

2. The production method according to claim 1,
wherein the pulverizing part is a grinding part capable of grinding the polytetrafluoroethylene.

3. The production method according to claim 2,
wherein the pulverization step includes grinding the polytetrafluoroethylene using at least a pair of the grinding parts placed opposite to each other.

4. The production method according to any one of claims 1 to 3,
wherein the polytetrafluoroethylene is a polytetrafluoroethylene having a history of being heated to a melting point thereof or higher.

5. The production method according to any one of claims 1 to 4,
wherein the pulverization step is performed in a dry manner.

6. The production method according to any one of claims 1 to 5,
wherein the pulverizer includes an inlet and an outlet, and the pulverization step is continuously performed.

7. The production method according to any one of claims 1 to 6,
wherein the pulverization step is repeated multiple times.

8. The production method according to any one of claims 1 to 7, further comprising a coarse pulverization step of coarsely pulverizing polytetrafluoroethylene to provide a coarse powder,
wherein the coarse powder obtained in the coarse pulverization step is to be fed to the pulverization step.

9. A polytetrafluoroethylene powder comprising scaly particles of polytetrafluoroethylene.

10. The polytetrafluoroethylene powder according to claim 9,
wherein the polytetrafluoroethylene powder has one or more melting points within a temperature range below 333°C.

11. The polytetrafluoroethylene powder according to claim 9 or 10,
wherein the polytetrafluoroethylene powder has a median diameter of 110 µm or smaller.

12. The polytetrafluoroethylene powder according to any one of claims 9 to 11,
wherein the polytetrafluoroethylene in a form of a test piece has an L* value in the L*a*b* color space of 70 or higher, the test piece being prepared by molding the polytetrafluoroethylene powder under the following conditions:
(molding conditions)
feeding 54 g of the polytetrafluoroethylene powder into a φ120-mm mold;
keeping the polytetrafluoroethylene powder at 370°C for 30 minutes using a heat press to transform the polytetrafluoroethylene into a molten state;
applying a 3-MPa load to the polytetrafluoroethylene for one minute to compression-mold the polytetrafluoroethylene; and
cooling the mold, thereby providing the test piece.

13. The polytetrafluoroethylene powder according to any one of claims 9 to 12,
wherein an L* value in the L*a*b* color space of the polytetrafluoroethylene in a form of a test piece has a rate of change of 25% or lower with respect to an L* value of the polytetrafluoroethylene powder, the test piece being prepared by molding the polytetrafluoroethylene powder under the following conditions:
(molding conditions)
feeding 54 g of the polytetrafluoroethylene powder into a φ120-mm mold;
keeping the polytetrafluoroethylene powder at 370°C for 30 minutes using a heat press to transform the polytetrafluoroethylene into a molten state;
applying a 3-MPa load to the polytetrafluoroethylene for one minute to compression-mold the polytetrafluoroethylene; and
cooling the mold, thereby providing the test piece.
